# EUROPEAN PATENT APPLICATION

(11) **EP 4 488 829 A1**
(43) Date of publication of application: **08.01.2025**
(21) Application number: 24178469.3
(22) Date of filing: 28.05.2024
(51) Int. Cl.: G06F 9/30

(54) **EXPLICIT INTEGRITY CHECK VALUE INITIALIZATION**

(30) Priority: 01.07.2023 US 202318346222
(71) Applicant: Intel Corporation, Santa Clara, CA 95054 (US)
(72) Inventor: Durham, David M., Beaverton, OR 97007 (US); LeMay, Michael, Hillsboro, OR 97123 (US)
(74) Representative: Samson & Partner Patentanwälte mbB

(57) **Abstract**

Techniques for explicit integrity check value initialization are described. In an embodiment, an apparatus includes an instruction decoder to decode a single instruction to set an integrity check value ICV corresponding to a destination location in a memory; and execution circuitry coupled to the instruction decoder, the execution circuitry to perform one or more operations corresponding to the single instruction, including storing data indicated by the single instruction into the destination location, and storing the ICV in the memory.

## Description

This invention was made with Government support under Agreement No. N66001-23-9-4004, awarded by Naval Information Warfare Center Pacific and funded by the Defense Advanced Research Project Agency. The Government has certain rights in the invention.

### BACKGROUND

Computers and other information processing systems may store confidential, private, and secret information in their memories. Therefore, memory safety and security are important concerns in computer system architecture and design.

### BRIEF DESCRIPTION OF DRAWINGS

Various examples in accordance with the present disclosure will be described with reference to the drawings, in which:
FIG. 1 illustrates a computing system for explicit integrity check value initialization according to an embodiment.
FIG. 2 illustrates a method for explicit integrity check value initialization according to an embodiment.
FIG. 3 illustrates a memory object including tripwires according to an embodiment.
FIG. 4 illustrates an example computing system.
FIG. 5 illustrates a block diagram of an example processor and/or System on a Chip (SoC) that may have one or more cores and an integrated memory controller.
FIG. 6(A) is a block diagram illustrating both an example in-order pipeline and an example register renaming, out-of-order issue/execution pipeline according to examples.
FIG. 6(B) is a block diagram illustrating both an example in-order architecture core and an example register renaming, out-of-order issue/execution architecture core to be included in a processor according to examples.
FIG. 7 illustrates examples of execution unit(s) circuitry.
FIG. 8 is a block diagram illustrating the use of a software instruction converter to convert binary instructions in a source instruction set architecture to binary instructions in a target instruction set architecture according to examples.

### DETAILED DESCRIPTION

The present disclosure relates to methods, apparatus, systems, and non-transitory computer-readable storage media for explicit integrity check value initialization. According to some examples, an apparatus includes an instruction decoder to decode a single instruction to set an integrity check value ICV corresponding to a destination location in a memory; and execution circuitry coupled to the instruction decoder, the execution circuitry to perform one or more operations corresponding to the single instruction, including storing data indicated by the single instruction into the destination location, and storing the ICV in the memory.

As mentioned in the background section, memory safety and security are important concerns in computer system architecture and design.

Some approaches to protecting memory against attacks may include using an integrity check value (ICV), message authentication code (MAC), checksum, or other value (each of which may be referred to for convenience as an ICV) in an integrity checking technique to verify that a code segment, data object, code or data structure, pointer, etc. is valid and/or may be validly entered, used, etc.

Existing techniques may be limited in their ability to mitigate overflows between different fields within the same structure (e.g., intra-object overflows), overflows between multiple entries in an array, etc. Approaches according to embodiments described in this specification may overcome these limitations, for example, by adding support for establishing tripwires around fields that may be subject to overflows.

Existing techniques may also be limited in their ability to mitigate uninitialized use vulnerabilities in software, since many memory safety mechanisms consider an allocation to be fully valid as soon as it is returned by an allocator, even if it has not been initialized. Approaches according to embodiments described in this specification may also overcome these limitations, for example, by providing for setting invalid ICVs throughout an object when it is allocated and then incrementally replacing them with valid ICVs as valid data is initialized into each portion of the object.

Approaches according to embodiments described in this specification may also be used to mitigate use-after-free (UAF) vulnerabilities, to pass subroutines pointers referencing nested objects within complex hierarchies of objects with varying field types, to detect uninitialized use immediately, etc.

In embodiments, cryptographic integrity checking linked to security context contained in pointers may be performed, such that an attempt to access a memory location using an incorrect cryptographic address (CA) will (with high probability) result in an integrity check failure, which will in turn lead to an exception that may be detected. In various implementations, the integrity checking architecture may support integrity checking at various granularities (e.g., 8B, 16B, 64B). In addition to the CA, other security context (e.g., data type) may be incorporated to be bound by integrity checks.

Descriptions of embodiments, based on ICVs, cryptographic capability computing (C3), etc., are provided as examples. Embodiments may include and/or relate to other memory safety, integrity checking, etc. techniques.

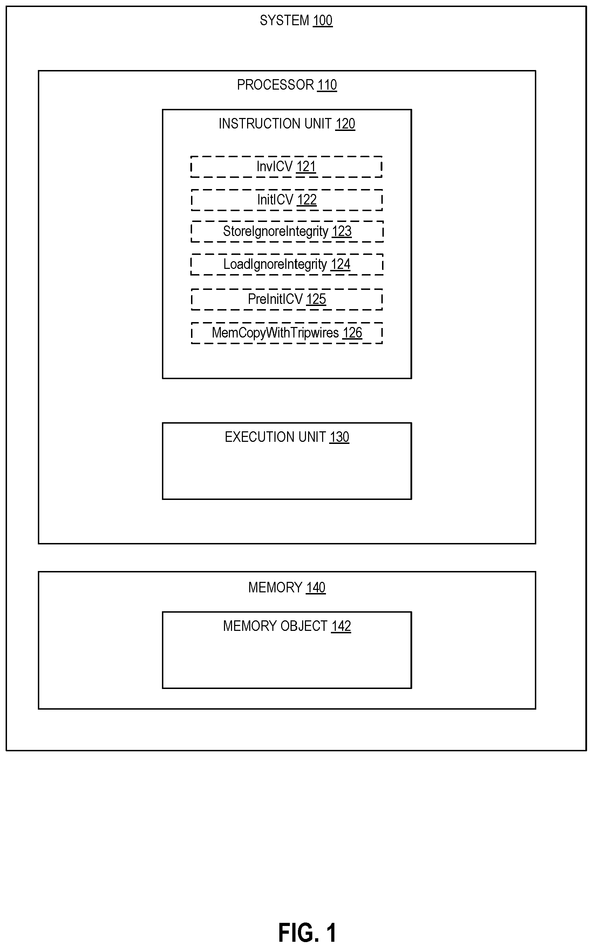

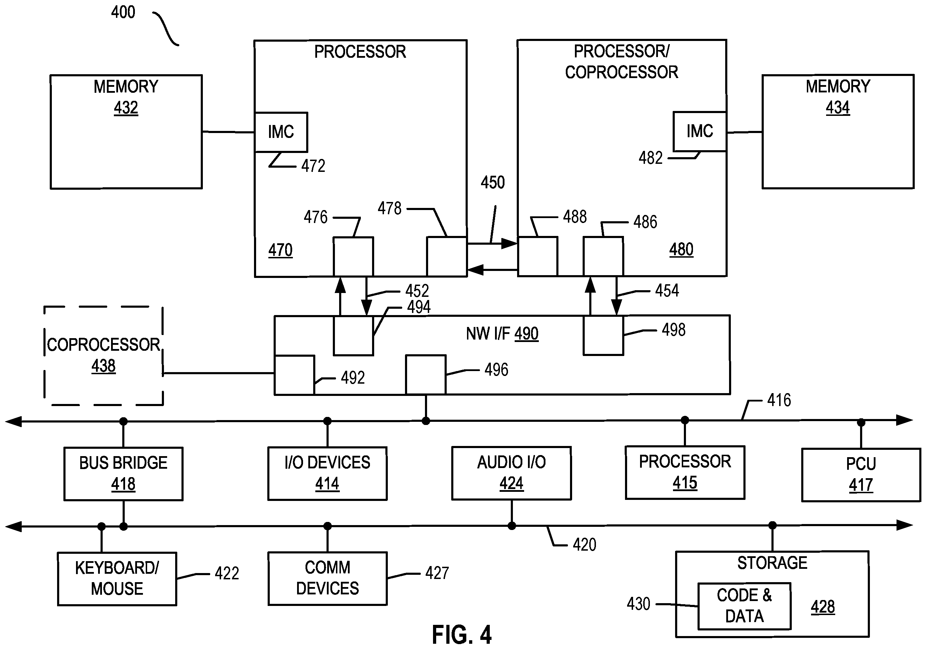

FIG. 1 illustrates an apparatus (e.g., a computing system) 100 for explicit integrity check value initialization according to an embodiment. Apparatus 100 may correspond to a computer system such as multiprocessor system 400 in Fig 4.

Apparatus 100 is shown in Figure 1 as including processor 110 and memory 140, each of which may represent any number of corresponding components (e.g., multiple processors and/or processor cores, multiple dynamic random-access memories (DRAMs), etc.)

For example, processor 110 may represent all or part of one or more hardware components including one or more processors, processor cores, or execution cores integrated on a single substrate or packaged within a single package, each of which may include multiple execution threads and/or multiple execution cores, in any combination. Each processor represented as or in processor 110 may be any type of processor, including a general-purpose microprocessor, such as a processor in the Intel^{®} Core^{®} Processor Family or other processor family from Intel^{®} Corporation or another company, a special purpose processor or microcontroller, or any other device or component in an information processing system in which an embodiment may be implemented. Processor 110 may be architected and designed to operate according to any instruction set architecture (ISA), with or without being controlled by microcode.

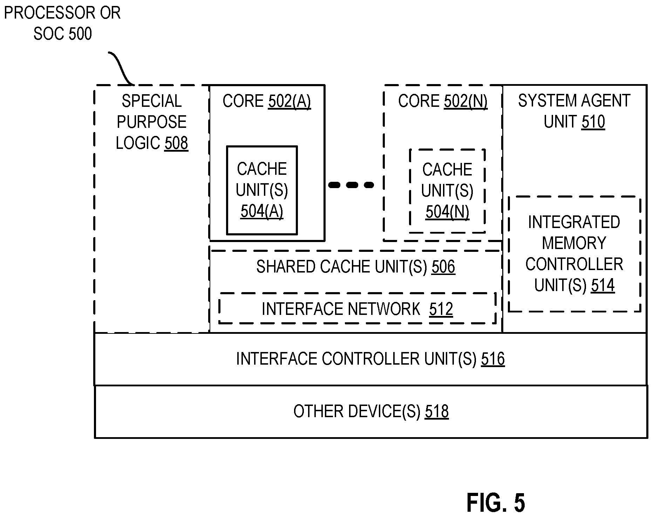

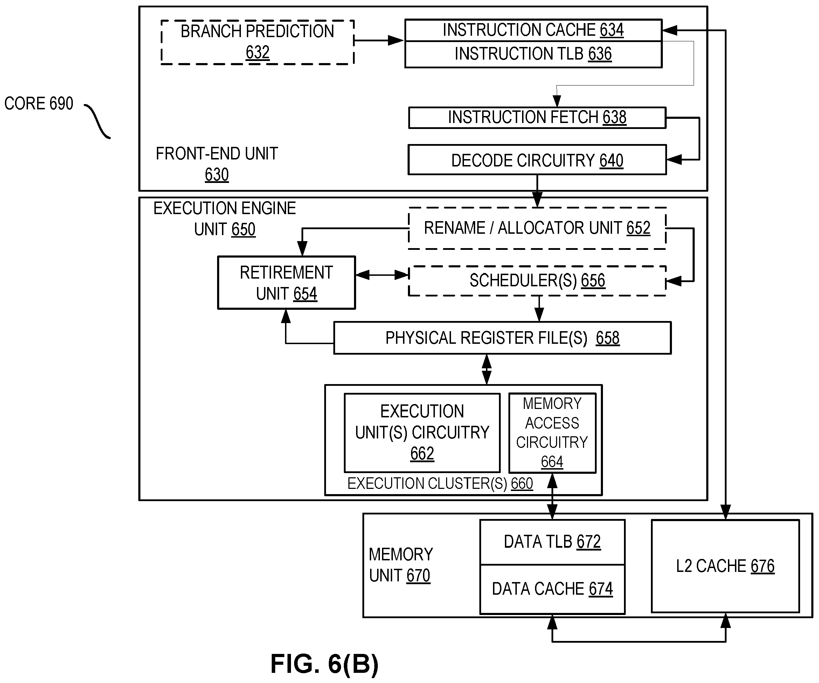

Processor 110 may be implemented in circuitry, gates, logic, structures, hardware, etc., all, or parts of which may be included in a discrete component and/or integrated into the circuitry of a processing device or any other apparatus in a computer or other information processing system. For example, processor 110 in Figure 1 may correspond to and/or be implemented/included in any of processors 470, 480, or 415 in Figure 4, processor 500 or one of cores 502A to 502N in Figure 5, and/or core 690 in Figure 6(B), each as described below.

Memory 140 may represent one or more DRAMs and/or other memory components providing a system memory or other memory or storage in or for apparatus 100. Memory 140 may contain one or more memory objects 142. Any such memory object may represent an object, region, structure, segment, etc. in memory, to which the operation of explicit ICV initialization according to embodiments may be relevant.

As shown, processor 110 includes instruction unit 120 and execution unit 130. Processor 110 may include any number of each of these elements (e.g., multiple execution units) and/or any other elements not shown in Figure 1.

Instruction unit 120 may correspond to and/or be implemented/included in front-end unit 630 in Figure 6(B), as described below, and/or may include any circuitry, gates, logic, structures, hardware, etc., such as an instruction decoder, to fetch, receive, decode, interpret, schedule, and/or handle instructions, such as InvICV 121, InitICV 122, StoreIgnoreIntegrity 123, LoadIgnoreIntegrity 124, PreInitICV 125, and MemCopyWithTripwires 126, each as described below, to be executed by processor 110. In Figure 1, instructions that may be decoded or otherwise handled by instruction unit 120 are represented as blocks with broken line borders because these instructions are not themselves hardware, but rather that instruction unit 120 may include hardware or logic capable of decoding or otherwise handling these instructions.

Any instruction format may be used in embodiments; for example, an instruction may include an opcode and one or more operands, where the opcode may be decoded into one or more micro-instructions or micro-operations for execution by execution unit 130. Operands or other parameters may be associated with an instruction implicitly, directly, indirectly, or according to any other approach.

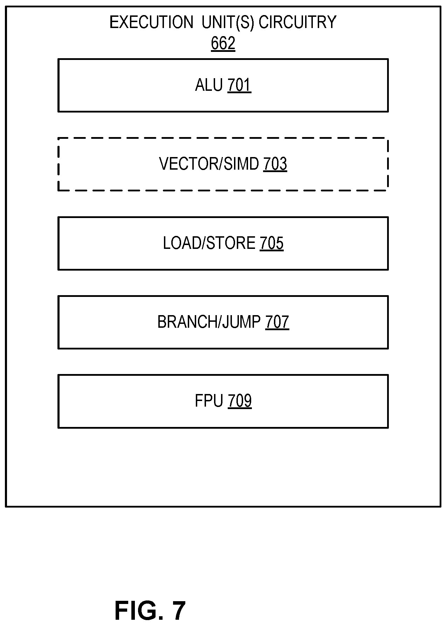

Execution unit 130 may correspond to and/or be implemented/included in any of execution engine 650 in Figure 6(B) and/or execution unit circuitry 662 in Figures 6(B) and 7, each as described below, and/or include any circuitry, gates, logic, structures, hardware, etc., such as arithmetic units, logic units, floating point units, shifters, load/store units, etc., to process data and execute instructions (including those shown in Figure 1), micro-instructions, and/or micro-operations. Execution unit 130 may represent any one or more physically or logically distinct execution units.

### Example Instructions

Embodiments may include the use of the following instructions, indicated by an example mnemonic followed by one or more example operand sources (e.g., memory or register) and sizes.

### InvICV m8

Operation: Invalidate (e.g., zero out) the ICV covering the granule of memory containing the specified memory address. Subsequent accesses to that location will (with high probability) generate an integrity check violation. Optionally, check that the integrity check succeeds for the initial ICV using the specified CA prior to invalidating the ICV. This option may be useful for avoiding potential denial of service scenarios due to an adversary invalidating memory locations that they are not authorized to access.

### InitICV m64, r64 (and analogously for other data operand sizes)

Operation: Set the specified data memory location to the specified data value, performing CA-based data encryption if applicable. Set the associated ICV. If the specified data operand size is smaller than the integrity checking granularity, then any existing data within that granule is read and used for computing the associated ICV as well. If the access is large or unaligned such that it spans multiple integrity check granules, then each of the relevant ICVs is initialized.

### StoreIgnoreIntegrity m64, r64 (and analogously for other data operand sizes)

Operation: If a series of stores is to be performed to fully initialize a single granule of data, then it may result in more precise uninitialized use checking to be able to wait to initialize the ICV until all of the initialization stores have been completed. However, by default, ordinary data stores will perform integrity checks. Thus, if ordinary stores were used to initialize the earlier values within the granule, then spurious integrity check violations would occur. Instead, the compiler may instrument software to use a series of StoreIgnoreIntegrity instructions to update the data without performing integrity checks. The final initialization store to the granule will be performed using an InitICV instruction.

### LoadIgnoreIntegrity m64, r64 (and analogously for other data operand sizes)

Operation: If a series of loads is to be performed to fully initialize a single granule of data, then it may result in more precise uninitialized use checking to be able to wait to initialize the ICV until all of the initialization loads have been completed. However, by default, ordinary data loads will perform integrity checks. Thus, if ordinary loads were used to initialize the earlier values within the granule, then spurious integrity check violations would occur. Instead, the compiler may instrument software to use a series of LoadIgnoreIntegrity instructions to update the data without performing integrity checks. The final initialization load to the granule will be performed using an InitICV instruction.

### MemCopyWithTripwires dest:m64, src:m64, size:r64

Operation: Copy a memory region of the specified size from the source location to the destination location. For each granule of memory, if the integrity check succeeds for the source granule, then initialize the ICV at the destination location using the data loaded from the source. Otherwise, check whether the decrypted value of the granule is a "magic number" indicating that the granule is an intra-object tripwire. If so, invalidate the ICV of the destination granule. Otherwise, generate an integrity check violation exception. Some embodiments may have an upper limit on the size of the memory copy that can feasibly be performed using this instruction. For larger copies, it may be necessary to use repeated sequences of distinct instructions to copy memory in smaller units, updating architectural state as the copy proceeds so that the copy can be resumed in the event that it is interrupted or generates an exception. For example, the REP MOVS instruction permits copying data from a location indicated by the value of a particular register to a location indicated by the value of a different particular register. The repetition count is indicated in a third register. All three of these registers may be updated as the copy progresses, which would allow resuming the copy if it is interrupted or generates an exception. A new instruction encoding could be specified to indicate that the memory copy should also copy tripwires. For example, a prefix could be prepended, e.g., resulting in an encoding of DS REP MOVS. Alternative embodiments may indicate in a control register or flags register whether REP MOVS operations should copy tripwires.

### PreInitICV m64, r64, imm8 (and analogously for other data operand sizes)

Operation: The same as InitICV, except also set a "PreInit" flag bit associated with the granule to indicate that the granule has not yet been fully initialized. Any attempt to perform an ordinary load from the granule while the PreInit flag bit is set will be treated as an integrity violation. The PreInit flag bit may be included as part of the granule value to be integrity-checked to mitigate an adversary modifying that bit directly, e.g., via a memory interposer. The immediate operand indicates whether this granule is expected to have already been initialized with a valid ICV, i.e., whether PreInitICV should perform integrity checks on the initial value of the granule prior to updating its value and ICV. An analogous change to InitICV may allow it to operate on either uninitialized or partially initialized memory locations.

PreInitICV may be used as an alternative to StoreIgnoreIntegrity or LoadIgnoreIntegrity, because using StoreIgnoreIntegrity or LoadIgnoreIntegrity to bypass integrity checks may allow an adversary to potentially corrupt data without being detected, e.g., after the data is emplaced with StoreIgnoreIntegrity or LoadIgnoreIntegrity and prior to InitICV being executed for the containing granule.

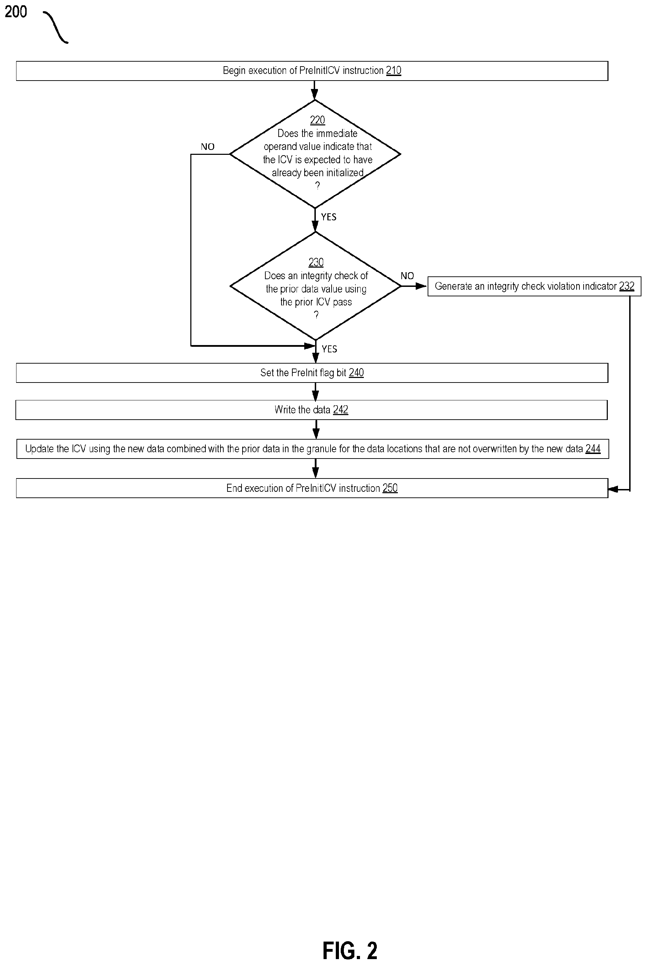

### The operation of PreInitICV is illustrated in Figure 2.

FIG. 2 illustrates a method 200 for explicit ICV initialization according to an embodiment. Method 200 may be performed by and/or in connection with the operation of an apparatus such as apparatus 100 in Figure 1; therefore, all or any portion of the preceding description of apparatus 100 may be applicable to method 200.

In 210, a PreInitICV instruction is decoded and execution of the decoded instruction begins.

In 220, it is determined whether the immediate operand value indicates that the ICV is expected to have already been initialized. If so, then method 200 continues in 230. If not, then method 200 continues in 240.

In 230, it is determined whether an integrity check of the prior data value using the prior ICV passes. If not, then in 232, an integrity check violation indicator is generated. If so, then method 200 continues in 240.

In 240, the PreInit flag bit is set. In 242, the new data is written. In 244, the ICV is updated using the new data combined with the prior data in the granule for the data locations that are not overwritten by the new data.

In 250, execution of the PreInitICV instruction ends.

### Example usages

In embodiments, software may use these instructions to mitigate uninitialized use, intra-object overflow, UAF, other memory safety vulnerabilities, etc.

For example, to mitigate UAF vulnerabilities, a memory allocator may use InvICV to invalidate all or a portion of the ICVs for a freed allocation or a freed portion of an allocation, e.g., one that has been shrunk using realloc. However, UAF issues are typically relevant to security when they occur after the underlying memory has been reallocated. Thus, the allocator may choose to not incur the overhead of explicitly invalidating ICVs as long as the new CA is used to reference the underlying memory after it has been reallocated. If an adversary corrupts freed and reallocated memory using the stale CA, that will likely be detected when the pointer to the new allocation is used to load the data. Conversely, if the adversary attempts to read out, via the stale CA, fresh data written via the fresh CA, that will also likely be detected.

As another example, to mitigate uninitialized use vulnerabilities, the compiler may instrument code such that the first instructions to initialize an allocation (e.g., the first stores to an object just returned by malloc or the first stores to a fresh stack allocation) may be emitted as PreInitICV or InitICV instructions.

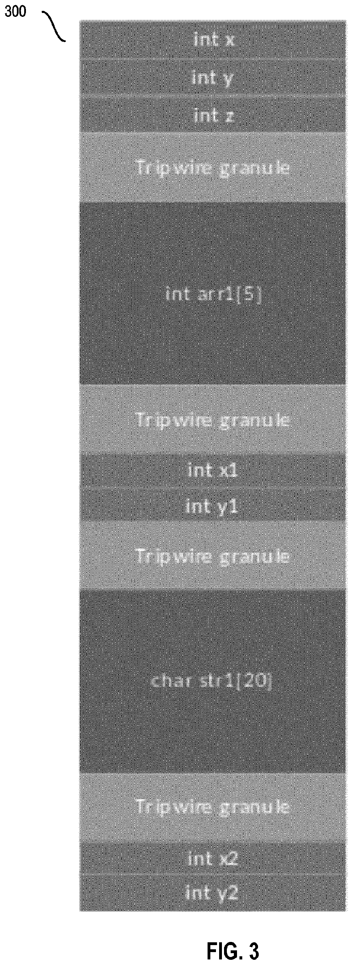

As another example, to mitigate intra-object overflows, the compiler may adjust structure layouts to leave one or more granules of padding (tripwires) around structure fields that may be susceptible to overflows, as shown in Figure 3. The compiler may omit initializing those padding regions such that linear overflows into those regions may be detected.

Figure 3 illustrates an example of a memory object 300 including tripwires according to an embodiment. Memory object 300 may correspond to an instance of memory object 142 in Figure 1.

For compatibility with bulk memory operations on objects containing embedded tripwires, MemCopyWithTripwires instruction (or other instructions for copying data including tripwires) may be used to propagate tripwires to a new location.

### Example apparatuses, methods, etc.

According to some examples, an apparatus (e.g., a processing device) includes an instruction decoder to decode a single instruction to set an integrity check value ICV corresponding to a destination location in a memory; and execution circuitry coupled to the instruction decoder, the execution circuitry to perform one or more operations corresponding to the single instruction, including storing data indicated by the single instruction into the destination location, and storing the ICV in the memory.

According to some examples, a method includes decoding, with an instruction decoder of a processing device, a single instruction to set an integrity check value (ICV) corresponding to a destination location in a memory; and performing, by the processing device, one or more operations corresponding to the single instruction, including storing data indicated by the single instruction into the destination location, and storing the ICV in the memory.

Any such examples may include any or any combination of the following aspects. The one or more operations may also include performing an integrity check before storing the ICV. The ICV may be invalid. The one or more operations may also include generating the ICV based at least in part on the indicated data. Generating the ICV at least in part on the indicated data may include generating the ICV at least in part on existing data already stored in a memory region including the destination location. The one or more operations may also include determining whether a memory region including the destination location is initialized. The one or more operations also includes setting a flag bit to indicate that the memory region including the destination location is not initialized. The one or more operations may also include copying the indicated data from a source location in the memory, and performing an integrity check on the indicated data.

According to some examples, an apparatus may include means for performing any function disclosed herein; an apparatus may include a data storage device that stores code that when executed by a hardware processor or controller causes the hardware processor or controller to perform any method or portion of a method disclosed herein; an apparatus, method, system etc. may be as described in the detailed description; a non-transitory machine-readable medium may store instructions that when executed by a machine causes the machine to perform any method or portion of a method disclosed herein. Embodiments may include any details, features, etc. or combinations of details, features, etc. described in this specification.

### Example Computer Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

FIG. 4 illustrates an example computing system. Multiprocessor system 400 is an interfaced system and includes a plurality of processors or cores including a first processor 470 and a second processor 480 coupled via an interface 450 such as a point-to-point (P-P) interconnect, a fabric, and/or bus. In some examples, the first processor 470 and the second processor 480 are homogeneous. In some examples, first processor 470 and the second processor 480 are heterogenous. Though the example system 400 is shown to have two processors, the system may have three or more processors, or may be a single processor system. In some examples, the computing system is a system on a chip (SoC).

Processors 470 and 480 are shown including integrated memory controller (IMC) circuitry 472 and 482, respectively. Processor 470 also includes interface circuits 476 and 478; similarly, second processor 480 includes interface circuits 486 and 488. Processors 470, 480 may exchange information via the interface 450 using interface circuits 478, 488. IMCs 472 and 482 couple the processors 470, 480 to respective memories, namely a memory 432 and a memory 434, which may be portions of main memory locally attached to the respective processors.

Processors 470, 480 may each exchange information with a network interface (NW I/F) 490 via individual interfaces 452, 454 using interface circuits 476, 494, 486, 498. The network interface 490 (e.g., one or more of an interconnect, bus, and/or fabric, and in some examples is a chipset) may optionally exchange information with a coprocessor 438 via an interface circuit 492. In some examples, the coprocessor 438 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 470, 480 or outside of both processors, yet connected with the processors via an interface such as P-P interconnect, such that either or both processors' local cache information may be stored in the shared cache if a processor is placed into a low power mode.

Network interface 490 may be coupled to a first interface 416 via interface circuit 496. In some examples, first interface 416 may be an interface such as a Peripheral Component Interconnect (PCI) interconnect, a PCI Express interconnect or another I/O interconnect. In some examples, first interface 416 is coupled to a power control unit (PCU) 417, which may include circuitry, software, and/or firmware to perform power management operations with regard to the processors 470, 480 and/or co-processor 438. PCU 417 provides control information to a voltage regulator (not shown) to cause the voltage regulator to generate the appropriate regulated voltage. PCU 417 also provides control information to control the operating voltage generated. In various examples, PCU 417 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 417 is illustrated as being present as logic separate from the processor 470 and/or processor 480. In other cases, PCU 417 may execute on a given one or more of cores (not shown) of processor 470 or 480. In some cases, PCU 417 may be implemented as a microcontroller (dedicated or general-purpose) or other control logic configured to execute its own dedicated power management code, sometimes referred to as P-code. In yet other examples, power management operations to be performed by PCU 417 may be implemented externally to a processor, such as by way of a separate power management integrated circuit (PMIC) or another component external to the processor. In yet other examples, power management operations to be performed by PCU 417 may be implemented within BIOS or other system software.

Various I/O devices 414 may be coupled to first interface 416, along with a bus bridge 418 which couples first interface 416 to a second interface 420. In some examples, one or more additional processor(s) 415, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 416. In some examples, second interface 420 may be a low pin count (LPC) interface. Various devices may be coupled to second interface 420 including, for example, a keyboard and/or mouse 422, communication devices 427 and storage circuitry 428. Storage circuitry 428 may be one or more non-transitory machine-readable storage media as described below, such as a disk drive or other mass storage device which may include instructions/code and data 430. Further, an audio I/O 424 may be coupled to second interface 420. Note that other architectures than the point-to-point architecture described above are possible. For example, instead of the point-to-point architecture, a system such as multiprocessor system 400 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

FIG. 5 illustrates a block diagram of an example processor and/or SoC 500 that may have one or more cores and an integrated memory controller. The solid lined boxes illustrate a processor 500 with a single core 502(A), system agent unit circuitry 510, and a set of one or more interface controller unit(s) circuitry 516, while the optional addition of the dashed lined boxes illustrates an alternative processor 500 with multiple cores 502(A)-(N), a set of one or more integrated memory controller unit(s) circuitry 514 in the system agent unit circuitry 510, and special purpose logic 508, as well as a set of one or more interface controller units circuitry 516. Note that the processor 500 may be one of the processors 470 or 480, or co-processor 438 or 415 of FIG. 4.

Thus, different implementations of the processor 500 may include: 1) a CPU with the special purpose logic 508 being integrated graphics and/or scientific (throughput) logic (which may include one or more cores, not shown), and the cores 502(A)-(N) being one or more general purpose cores (e.g., general purpose in-order cores, general purpose out-of-order cores, or a combination of the two); 2) a coprocessor with the cores 502(A)-(N) being a large number of special purpose cores intended primarily for graphics and/or scientific (throughput); and 3) a coprocessor with the cores 502(A)-(N) being a large number of general purpose in-order cores. Thus, the processor 500 may be a general-purpose processor, coprocessor, or special-purpose processor, such as, for example, a network or communication processor, compression engine, graphics processor, GPGPU (general purpose graphics processing unit), a high throughput many integrated cores (MIC) coprocessor (including 30 or more cores), embedded processor, or the like. The processor may be implemented on one or more chips. The processor 500 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 504(A)-(N) within the cores 502(A)-(N), a set of one or more shared cache unit(s) circuitry 506, and external memory (not shown) coupled to the set of integrated memory controller unit(s) circuitry 514. The set of one or more shared cache unit(s) circuitry 506 may include one or more mid-level caches, such as level 2 (L2), level 3 (L3), level 4 (L4), or other levels of cache, such as a last level cache (LLC), and/or combinations thereof. While in some examples interface network circuitry 512 (e.g., a ring interconnect) interfaces the special purpose logic 508 (e.g., integrated graphics logic), the set of shared cache unit(s) circuitry 506, and the system agent unit circuitry 510, alternative examples use any number of well-known techniques for interfacing such units. In some examples, coherency is maintained between one or more of the shared cache unit(s) circuitry 506 and cores 502(A)-(N). In some examples, interface controller unit circuitry 516 couples the cores 502 to one or more other devices 518 such as one or more I/O devices, storage, one or more communication devices (e.g., wireless networking, wired networking, etc.), etc.

In some examples, one or more of the cores 502(A)-(N) are capable of multi-threading. The system agent unit circuitry 510 includes those components coordinating and operating cores 502(A)-(N). The system agent unit circuitry 510 may include, for example, power control unit (PCU) circuitry and/or display unit circuitry (not shown). The PCU may be or may include logic and components needed for regulating the power state of the cores 502(A)-(N) and/or the special purpose logic 508 (e.g., integrated graphics logic). The display unit circuitry is for driving one or more externally connected displays.

The cores 502(A)-(N) may be homogenous in terms of instruction set architecture (ISA). Alternatively, the cores 502(A)-(N) may be heterogeneous in terms of ISA; that is, a subset of the cores 502(A)-(N) may be capable of executing an ISA, while other cores may be capable of executing only a subset of that ISA or another ISA.

### Example Core Architectures - In-order and out-of-order core block diagram.

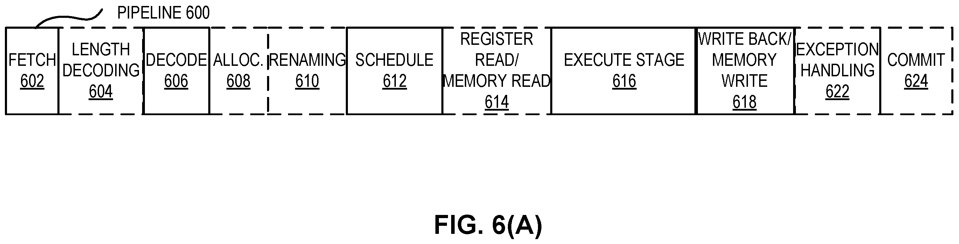

FIG. 6(A) is a block diagram illustrating both an example in-order pipeline and an example register renaming, out-of-order issue/execution pipeline according to examples. FIG. 6(B) is a block diagram illustrating both an example in-order architecture core and an example register renaming, out-of-order issue/execution architecture core to be included in a processor according to examples. The solid lined boxes in FIGS. 6(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 6(A), a processor pipeline 600 includes a fetch stage 602, an optional length decoding stage 604, a decode stage 606, an optional allocation (Alloc) stage 608, an optional renaming stage 610, a schedule (also known as a dispatch or issue) stage 612, an optional register read/memory read stage 614, an execute stage 616, a write back/memory write stage 618, an optional exception handling stage 622, and an optional commit stage 624. One or more operations can be performed in each of these processor pipeline stages. For example, during the fetch stage 602, one or more instructions are fetched from instruction memory, and during the decode stage 606, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 606 and the register read/memory read stage 614 may be combined into one pipeline stage. In one example, during the execute stage 616, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 6(B) may implement the pipeline 600 as follows: 1) the instruction fetch circuitry 638 performs the fetch and length decoding stages 602 and 604; 2) the decode circuitry 640 performs the decode stage 606; 3) the rename/allocator unit circuitry 652 performs the allocation stage 608 and renaming stage 610; 4) the scheduler(s) circuitry 656 performs the schedule stage 612; 5) the physical register file(s) circuitry 658 and the memory unit circuitry 670 perform the register read/memory read stage 614; the execution cluster(s) 660 perform the execute stage 616; 6) the memory unit circuitry 670 and the physical register file(s) circuitry 658 perform the write back/memory write stage 618; 7) various circuitry may be involved in the exception handling stage 622; and 8) the retirement unit circuitry 654 and the physical register file(s) circuitry 658 perform the commit stage 624.

FIG. 6(B) shows a processor core 690 including front-end unit circuitry 630 coupled to execution engine unit circuitry 650, and both are coupled to memory unit circuitry 670. The core 690 may be a reduced instruction set architecture computing (RISC) core, a complex instruction set architecture computing (CISC) core, a very long instruction word (VLIW) core, or a hybrid or alternative core type. As yet another option, the core 690 may be a special-purpose core, such as, for example, a network or communication core, compression engine, coprocessor core, general purpose computing graphics processing unit (GPGPU) core, graphics core, or the like.

The front-end unit circuitry 630 may include branch prediction circuitry 632 coupled to instruction cache circuitry 634, which is coupled to an instruction translation lookaside buffer (TLB) 636, which is coupled to instruction fetch circuitry 638, which is coupled to decode circuitry 640. In one example, the instruction cache circuitry 634 is included in the memory unit circuitry 670 rather than the front-end circuitry 630. The decode circuitry 640 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 640 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 640 may be implemented using various different mechanisms. Examples of suitable mechanisms include, but are not limited to, look-up tables, hardware implementations, programmable logic arrays (PLAs), microcode read only memories (ROMs), etc. In one example, the core 690 includes a microcode ROM (not shown) or other medium that stores microcode for certain macroinstructions (e.g., in decode circuitry 640 or otherwise within the front-end circuitry 630). In one example, the decode circuitry 640 includes a micro-operation (micro-op) or operation cache (not shown) to hold/cache decoded operations, micro-tags, or micro-operations generated during the decode or other stages of the processor pipeline 600. The decode circuitry 640 may be coupled to rename/allocator unit circuitry 652 in the execution engine circuitry 650.

The execution engine circuitry 650 includes the rename/allocator unit circuitry 652 coupled to retirement unit circuitry 654 and a set of one or more scheduler(s) circuitry 656. The scheduler(s) circuitry 656 represents any number of different schedulers, including reservations stations, central instruction window, etc. In some examples, the scheduler(s) circuitry 656 can include arithmetic logic unit (ALU) scheduler/scheduling circuitry, ALU queues, address generation unit (AGU) scheduler/scheduling circuitry, AGU queues, etc. The scheduler(s) circuitry 656 is coupled to the physical register file(s) circuitry 658. Each of the physical register file(s) circuitry 658 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 658 includes vector registers unit circuitry, writemask registers unit circuitry, and scalar register unit circuitry. These register units may provide architectural vector registers, vector mask registers, general-purpose registers, etc. The physical register file(s) circuitry 658 is coupled to the retirement unit circuitry 654 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 654 and the physical register file(s) circuitry 658 are coupled to the execution cluster(s) 660. The execution cluster(s) 660 includes a set of one or more execution unit(s) circuitry 662 and a set of one or more memory access circuitry 664. The execution unit(s) circuitry 662 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 656, physical register file(s) circuitry 658, and execution cluster(s) 660 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 664). It should also be understood that where separate pipelines are used, one or more of these pipelines may be out-of-order issue/execution and the rest in-order.

In some examples, the execution engine unit circuitry 650 may perform load store unit (LSU) address/data pipelining to an Advanced Microcontroller Bus (AMB) interface (not shown), and address phase and writeback, data phase load, store, and branches.

The set of memory access circuitry 664 is coupled to the memory unit circuitry 670, which includes data TLB circuitry 672 coupled to data cache circuitry 674 coupled to level 2 (L2) cache circuitry 676. In one example, the memory access circuitry 664 may include load unit circuitry, store address unit circuitry, and store data unit circuitry, each of which is coupled to the data TLB circuitry 672 in the memory unit circuitry 670. The instruction cache circuitry 634 is further coupled to the level 2 (L2) cache circuitry 676 in the memory unit circuitry 670. In one example, the instruction cache 634 and the data cache 674 are combined into a single instruction and data cache (not shown) in L2 cache circuitry 676, level 3 (L3) cache circuitry (not shown), and/or main memory. The L2 cache circuitry 676 is coupled to one or more other levels of cache and eventually to a main memory.

The core 690 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 690 includes logic to support a packed data instruction set architecture extension (e.g., AVX1, AVX2), thereby allowing the operations used by many multimedia applications to be performed using packed data.

### Example Execution Unit(s) Circuitry.

FIG. 7 illustrates examples of execution unit(s) circuitry, such as execution unit(s) circuitry 662 of FIG. 6(B). As illustrated, execution unit(s) circuity 662 may include one or more ALU circuits 701, optional vector/single instruction multiple data (SIMD) circuits 703, load/store circuits 705, branch/jump circuits 707, and/or Floating-point unit (FPU) circuits 709. ALU circuits 701 perform integer arithmetic and/or Boolean operations. Vector/SIMD circuits 703 perform vector/SIMD operations on packed data (such as SIMD/vector registers). Load/store circuits 705 execute load and store instructions to load data from memory into registers or store from registers to memory. Load/store circuits 705 may also generate addresses. Branch/jump circuits 707 cause a branch or jump to a memory address depending on the instruction. FPU circuits 709 perform floating-point arithmetic. The width of the execution unit(s) circuitry 662 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

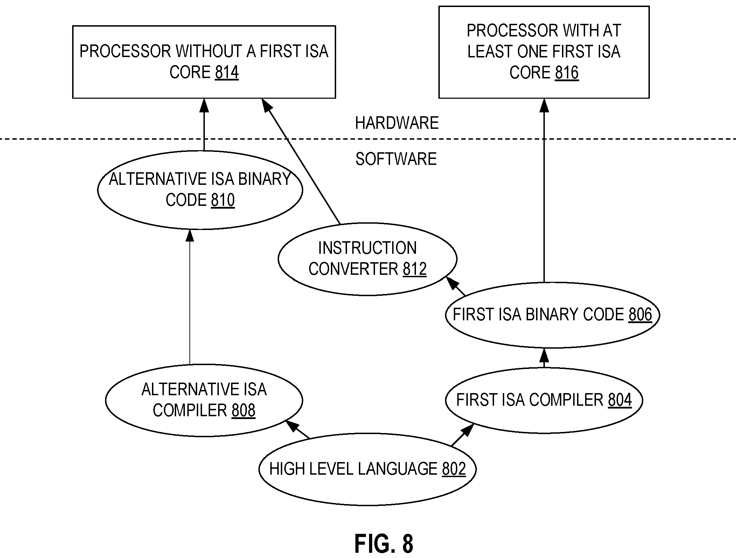

FIG. 8 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 8 shows a program in a high-level language 802 may be compiled using a first ISA compiler 804 to generate first ISA binary code 806 that may be natively executed by a processor with at least one first ISA core 816. The processor with at least one first ISA core 816 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 804 represents a compiler that is operable to generate first ISA binary code 806 (e.g., object code) that can, with or without additional linkage processing, be executed on the processor with at least one first ISA core 816. Similarly, FIG. 8 shows the program in the high-level language 802 may be compiled using an alternative ISA compiler 808 to generate alternative ISA binary code 810 that may be natively executed by a processor without a first ISA core 814. The instruction converter 812 is used to convert the first ISA binary code 806 into code that may be natively executed by the processor without a first ISA core 814. This converted code is not necessarily to be the same as the alternative ISA binary code 810; however, the converted code will accomplish the general operation and be made up of instructions from the alternative ISA. Thus, the instruction converter 812 represents software, firmware, hardware, or a combination thereof that, through emulation, simulation, or any other process, allows a processor or other electronic device that does not have a first ISA processor or core to execute the first ISA binary code 806.

References to "one example," "an example," "one embodiment," "an embodiment," etc., indicate that the example or embodiment described may include a particular feature, structure, or characteristic, but every example or embodiment may not necessarily include the particular feature, structure, or characteristic. Moreover, such phrases do not necessarily refer to the same example or embodiment. Further, when a particular feature, structure, or characteristic is described in connection with an example or embodiment, it is submitted that it is within the knowledge of one skilled in the art to affect such feature, structure, or characteristic in connection with other examples or embodiments whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e., A and B, A and C, B and C, and A, B and C). As used in this specification and the claims and unless otherwise specified, the use of the ordinal adjectives "first," "second," "third," etc. to describe an element merely indicates that a particular instance of an element or different instances of like elements are being referred to and is not intended to imply that the elements so described must be in a particular sequence, either temporally, spatially, in ranking, or in any other manner. Also, as used in descriptions of embodiments, a "/" character between terms may mean that what is described may include or be implemented using, with, and/or according to the first term and/or the second term (and/or any other additional terms).

Also, the terms "bit," "flag," "field," "entry," "indicator," etc., may be used to describe any type or content of a storage location in a register, table, database, or other data structure, whether implemented in hardware or software, but are not meant to limit embodiments to any particular type of storage location or number of bits or other elements within any particular storage location. For example, the term "bit" may be used to refer to a bit position within a register and/or data stored or to be stored in that bit position. The term "clear" may be used to indicate storing or otherwise causing the logical value of zero to be stored in a storage location, and the term "set" may be used to indicate storing or otherwise causing the logical value of one, all ones, or some other specified value to be stored in a storage location; however, these terms are not meant to limit embodiments to any particular logical convention, as any logical convention may be used within embodiments.

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. A processor device comprising:
an instruction decoder to decode a single instruction to set an integrity check value (ICV) corresponding to a destination location in a memory; and
execution circuitry coupled to the instruction decoder, the execution circuitry to perform one or more operations corresponding to the single instruction, including:
storing data indicated by the single instruction into the destination location, and
storing the ICV in the memory.

2. The processor device of claim 1, wherein the one or more operations also includes performing an integrity check before storing the ICV.

3. The processor device of claim 1 or 2, wherein the ICV is invalid.

4. The processor device of any of claims 1-3, wherein the one or more operations also includes generating the ICV based at least in part on the indicated data.

5. The processor device of claim 4, wherein generating the ICV at least in part on the indicated data includes generating the ICV at least in part on existing data already stored in a memory region including the destination location.

6. The processor device of any of claims 1-5, wherein the one or more operations also includes determining whether a memory region including the destination location is initialized and setting a flag bit to indicate that the memory region including the destination location is not initialized.

7. The processor device of any of claims 1-6, wherein the one or more operations also includes:
copying the indicated data from a source location in the memory, and
performing an integrity check on the indicated data.

8. A method comprising:
decoding, with an instruction decoder of a processing device, a single instruction to set an integrity check value (ICV) corresponding to a destination location in a memory; and
performing, by the processing device, one or more operations corresponding to the single instruction, including:
storing data indicated by the single instruction into the destination location, and
storing the ICV in the memory.

9. The method of claim 8, wherein the one or more operations also includes generating the ICV based at least in part on the indicated data.

10. The method of claim 9, wherein generating the ICV at least in part on the indicated data includes generating the ICV at least in part on existing data already stored in a memory region including the destination location.

11. The method of any of claims 8-10, wherein the one or more operations also includes: determining whether a memory region including the destination location is initialized; and setting a flag bit to indicate that the memory region including the destination location is not initialized.

12. A non-transitory machine-readable medium storing at least a single instruction which, when executed by a machine, causes the machine to perform a method comprising:
storing data indicated by the single instruction into a destination location, and
storing an ICV in a memory.

13. The non-transitory machine-readable medium of claim 12, wherein the method further comprises generating the ICV based at least in part on the indicated data.

14. The non-transitory machine-readable medium of claim 13, wherein the method further comprises generating the ICV at least in part on the indicated data includes generating the ICV at least in part on existing data already stored in a memory region including the destination location.

15. The non-transitory machine-readable medium of any of claims 12-14, wherein the method further comprises:
determining whether a memory region including the destination location is initialized, and
setting a flag bit to indicate that the memory region including the destination location is not initialized.
